# EUROPEAN PATENT APPLICATION

(11) **EP 2 957 768 A1**
(43) Date of publication of application: **23.12.2015**
(21) Application number: 14172500.2
(22) Date of filing: 16.06.2014
(51) Int. Cl.: F03D 7/06, F03D 3/06

(54) **Improved vertical axis wind turbine**

(71) Applicant: Cockerill Maintenance & Ingenierie S.A., 4100 Seraing (BE)
(72) Inventor: Ottmer, Thomas, B-4120 Neupre (BE)
(74) Representative: Pronovem

(57) **Abstract**

A vertical axis wind turbine having airfoil blades adjustable according to the wind direction, in which:
- each airfoil blade (2) is essentially vertically and pivotally attached through a second blade rotation axis (3B) to the outer end of its corresponding blade assembly, the first blade rotation axis (3A) and the second blade rotation axis (3B) being located in the vicinity of the leading edge and of the trailing edge of the airfoil blade respectively ;
- the blade steering system (1) comprises blade supporting means having a rectilinear blade supporting arm or strain rod (4) and a crank arm (5), said blade supporting arm (4) having a first tip being designed for loosely accommodating the blade rotation axis or shaft (3) and having a second tip to connect itself to said crank arm (5), which is disposed at right angle with respect to the blade supporting arm (4), said crank arm (5) being connected to said central rotation shaft (6) ;
- the blade steering system (1) also comprises a steering rod (7) and a linear actuator (8), said steering rod (7) being pivotally connected to the second blade rotation axis (3B) and said linear actuator (8) causing linear displacement of the steering rod (7) so as to orientate the corresponding airfoil blade (2) ;
- the blade steering system (1) also comprises a small light-weight vane (10) freely rotatably mounted on the top of the first blade rotation axis (3A) of each airfoil blade (2) and a control system able to permanently acquire the position of said vane (10) and to control the actuator (8) according to that position.

## Description

### Field of the invention

The present invention relates to the field of transformation of fluid flow energy into rotational energy. In particular, the invention relates to an improvement of vertical axis wind mill turbines (VAWT). The invention is also applicable to water mills.

### Technological background and prior art

Horizontal axis wind mill turbines (HAWT) have a special yaw system to assure that the turbine always faces the true wind and also have a special system to adjust the blades for the apparent wind (which is the vector addition of true wind and tangential speed of the airfoil blade tip), making the investment expensive. The variation of apparent wind over the blade radius requires also special blade shape. Furthermore HAWT tend to become bigger and bigger as it is well-known that their power performance grows with the turbine diameter as power increases with blade tip speed. This generally induces acoustic problems especially due to wakes generated by blade tips. The size and noise of these turbines thus lower their acceptance by the population.

Up to now VAWT are marginal in the wind turbine business. HAWT are considered to be more efficient (power coefficient up to 45 %) compared to state-of-the-art VAWT (up to 38 %).

However VAWT also become more performing when built with larger diameter, as the blade speed becomes higher. Nowadays the design of VAWT is typically orientated towards turbines, which only use lift principle, with their blades to capture wind energy, as it allows to rotate faster than wind speed, and which is not the case of turbines using drag principle or a combination of drag and lift principle.

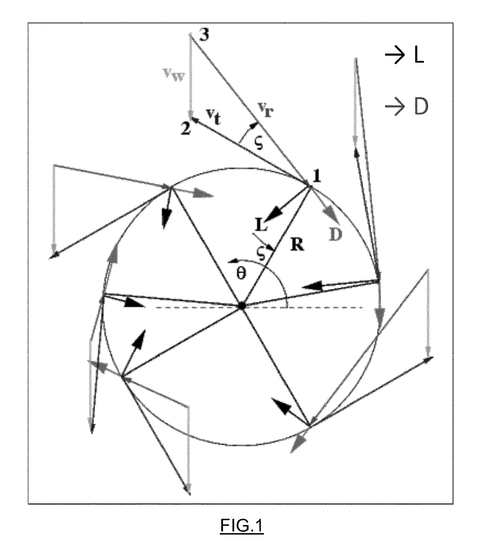

FIG.1 shows a top view of a single blade in a VAWT as it moves on a circle of radius R in counter-clockwise rotation around the vertical axis of the wind turbine which is located at point 0. FIG. 1 corresponds to the so-called supercritical case, i.e. a case for which the blade tip speed is greater than the wind speed. The angle Θ is a measure of the instantaneous position of the airfoil blade shown here at 6 distinct positions (for example in FIG.1, Θ = 10, 60, 120, 175, 210, and 300 degree resp.). Vector v_{w} denotes the (true) wind speed in direction and magnitude, while vₜ denotes the tangential speed of the blade tip which is related to the angular velocity ω [rad/s] of the VAWT by: vₜ = ω R, ω being the rotational speed. The auxiliary triangle 123 allows then to represent the size and direction of the apparent or relative velocity vᵣ, called the apparent wind speed, that is the air velocity which attacks the blade as seen by the blade.

For each angular position of the blade are represented the lift and drag forces. The drag force, D, is by definition parallel to apparent wind speed vᵣ, while the lift force L is always directed normal to apparent wind speed vᵣ depending on attack angle of the apparent wind.

Lift and drag forces depend on the square of apparent wind speed, blade surface and shape as well as angle of attack (angle between apparent wind direction and blade cord). As for the HAWT, in VAWT, the direction of apparent wind changes continuously, while the blades are turning. For VAWT this is a special issue.

VAWT according to lift principle started off with fixed blades are requiring special starting devices. One can easily recognize in FIG. 1 that with fixed blade turbines the lift force does not contribute to rotating the turbine in all blade positions. Numerous patents try to improve this situation by rending the blades mobile about a vertical axis to have a better orientation toward the apparent wind, when turning around the turbine central shaft, thus achieving better wind capture. This is mostly obtained by a central steering system controlled by a central vane allowing for adjustment in case wind changes its direction.

Blade adjustment systems, such as centrally steered blade orientation by use of a vane, allow actual blade orientation so that the lift forces are directed in a more favorable manner for turbine rotation. Typical patent applications aiming at this improvement are US 2012/0003092 A1 and US 2010/0028150 A1. While such a system is simple, it has a number of drawbacks:
- only a portion of the lift forces contribute to turning the mill in sectors I and II (0°-90° and 90-180° resp.) ;
- well-known adverse forces in sectors III and IV (180°-270° and 270°-360° resp.) reduce the VAWT efficiency ;
- poor power performance coefficients Cp (harvested power / wind power) are obtained (less than 30%) and
- central vane or steering rods do not take local apparent wind into account.

Patent EP 0 506 749 requires individual vanes for optimal orientation of individual blades, multiple measuring and blade controlling devices, but vane protection against flow over blade edge due to pressure difference between luff and leeside was not included. Document US 2012/0003092 A1 proposes a variety of blade orientation possibilities.

Patent US 4,566,854 claims better performance with crank arm design, but no automatic blade adjustment.

More recently a patent application US 2012/0243990 A1 showing self-orientating blades was published, actually using the blades as vanes, which requires special conditions to attach the blades to their rotating arms. This individual adjustment of blades only depends on the apparent wind direction, depression effects and eventual centrifugal forces on the blades.

### Aims of the invention

The present invention aims at pulling up the power efficiency of VAWT, preferably to get an efficiency comparable to that of efficient HAWT with high tip speed by exploiting centrifugal force.

Furthermore the invention aims at obtaining a better power density for wind harvesting with VAWT than for HAWT.

Another goal of the invention is to provide VAWT, which are highly efficient, while less expensive than HAWT and more acceptable for environment.

### Summary of the invention

A first aspect of the present invention relates to a vertical axis wind turbine having airfoil blades adjustable according to the wind direction, comprising:
- a rotatable central rotation shaft ;
- a plurality of radially spaced blade assemblies connected to the central rotation shaft by a connection system, in which an airfoil blade is essentially vertically and pivotally attached through a first blade rotation axis or shaft to the outer end of each of said blade assemblies, each of said airfoil blades having a leading edge and a trailing edge and
- a blade steering system intended to pivotally orientate each airfoil blade around its first blade rotation axis or shaft so as to obtain a determined attack angle for said airfoil blade with respect to the local apparent wind,
characterized in that :
- each airfoil blade is also essentially vertically and pivotally attached through a second blade rotation axis to the outer end of its corresponding blade assembly, the first blade rotation axis and the second blade rotation axis being located in the vicinity of the leading edge and of the trailing edge of the airfoil blade respectively ;
- the blade steering system comprises blade supporting means having a rectilinear blade supporting arm or strain rod and a crank arm, said blade supporting arm having a first tip being designed for loosely accommodating the blade rotation axis or shaft and having a second tip to connect itself to said crank arm, which is disposed at right angle with respect to the blade supporting arm, said crank arm being connected to said central rotation shaft ;
- the blade steering system also comprises a steering rod and a linear actuator, said steering rod being pivotally connected to the second blade rotation axis and said linear actuator causing linear displacement of the steering rod so as to orientate the corresponding airfoil blade ;
- the blade steering system also comprises a small light-weight vane freely rotatably mounted on the top of the first blade rotation axis of each airfoil blade and a control system able to permanently acquire the position of said vane and to control the actuator according to that position.

According to preferred embodiments, the vertical axis wind turbine of the invention additionally comprises at least one of the following characteristics, or a suitable combination of the following characteristics:
- the first tip of the strain rod designed for loosely accommodating the blade rotation axis or shaft is under the form of a V-shaped lodging ;
- the position of the first blade rotation axis or shaft in the vicinity of the leading edge is selected primarily so as to eliminate blade tilting moment that could be caused by lift force ;
- a fixed part of the linear actuator is connected to the central rotation shaft directly or via the crank shaft of the blade steering system of an adjacent airfoil blade ;
- the vertical blade edge opposite to the vane is provided with a device for reducing the edge wake, preferably a split edge ;
- the turbine comprises a central steering low inertia vane disposed on top of the turbine ;
- the turbine comprises for each vane a shielding device mechanically connected to the corresponding blade in order to shield the vane from air pressure difference on rear and front blade sides respectively ;
- the position of the low inertia vane is selected so as to avoid influences from the blade turbulences ;
- the turbine additionally comprises a stress rod respectively connected to the first rotation axis or shaft of each airfoil blade via its lodging, and to a point of connection of the crank arm tip of a following blade, on the other side of the central rotation shaft with regard of the blade axis, where it cooperates with a pivot located in a long hole practiced in the stress rod and with an adjusting screw to allow stress only in the stress rod ;
- the control system comprises a microcontroller or a computer.

A second aspect of the invention relates to a method for rotating a vertical axis wind turbine as described above, comprising the steps of:
- starting up the turbine with a predetermined orientation of the airfoil blades in the wind, possibly with the help of an external drive system ;
- measuring the direction of the apparent wind on each airfoil blade using the individual blade vanes ;
- communicating said apparent wind direction to the control system ;
- providing an action of the control system on the actuators of the individual steering systems in order to rotate each airfoil blade in a predetermined position about the wind direction as a function of the measured apparent wind direction, so as to maximize the lift force component contributing to the rotation of the turbine in all sectors I, II, III and IV.

Preferably, the method further comprises the steps of:
- at starting up of the turbine, orienting the airfoil blades with lift force towards the center of the turbine in sectors I and II and outwards in sectors III and IV ;
- measuring the rotation speed of the turbine ;
- when the turbine has acquired a predetermined rotation speed value, orienting the airfoil blades so that all the lift forces are oriented outwards of the turbine, not only in sectors III and IV but also in sectors I and II.

More preferably the method further comprises the steps of:
- measuring the wind speed ;
- in case of high values of the wind speed and/or turbine rotational speed, reducing or annulling the attack angle of the airfoil blades.

### Short description of the drawings

FIG. 1 shows a top view vector diagram in the case of prior art VAWT, for example a Darrieus turbine having fixed blade orientation perpendicular to the radius of the turbine. The figure shows the speed vectors (wind speed v_{w}, apparent wind speed vᵣ, blade speed vₜ) as well as the lift L and drag D forces for a blade moving on a circle of radius R in counter-clockwise direction around the vertical axis of the wind (according to K. Boyce and Z. Herzog).
FIG. 2 shows the vector diagram for the case of a Darrieus turbine with blade orientation having non-symmetric blades with high lift coefficient. The blades are self-oriented in optimum attack angle and the wind speed is smaller than the blade speed. The speed and force vectors are shown in the four sectors I to IV.
FIG. 3 schematically represents a top view of an electro-mechanical blade steering system according to an embodiment of prior art or that can be inferred from prior art.
FIG. 4 schematically represents a top view of the system of FIG.3 generalized to a vertical axis turbine with four blades having each vane control.
FIG. 5 shows an elevation view of the system of FIG.4, having additional shields for the vanes indicating the apparent wind direction for each individual blade and split edges for reducing bottom wake, as well as a top vane to measure wind direction.
FIG. 6 shows the vector diagram for the case of a Darrieus turbine having symmetric blades as well as an electro-mechanical steering system according to FIG. 3 to 5. The blades are adjustable in optimum attack angle. The lift forces are directed outwards in sectors III and IV.
FIG. 7 shows a vane-controlled steering system similar to the one of FIG. 5, but adapted for the use of symmetric blades and having stress rods, according to a preferred embodiment of the invention.
FIG. 8 schematically represents a preferred embodiment for a stress and strain rod fixing system used in the steering system of FIG. 7.
FIG. 9 schematically shows the forces on the blade with the stress and strain rod fixing of FIG. 8, in case the centrifugal force is opposite to the major lift component.
FIG. 10 schematically shows the forces on the blade with the stress and strain rod fixing of FIG. 8, in case the centrifugal force is in the same direction as the major lift component.
FIG. 11 shows the vector diagram for the case of a Darrieus turbine having symmetric blades and with the stress and strain rod fixing of FIG. 8, for steering at high rotation speed. The blades are adjustable in optimum attack angle and the wind speed is smaller than the blade speed. The lift forces are oriented outwards in all sectors I to IV.

### Detailed description of embodiments relating to prior art

Two different cases have to be distinguished, respectively using non-symmetric high performance blades and using symmetric blades. The following is related to use of non-symmetric blades.

### 1. The case of non-symmetric blades with high lift coefficient

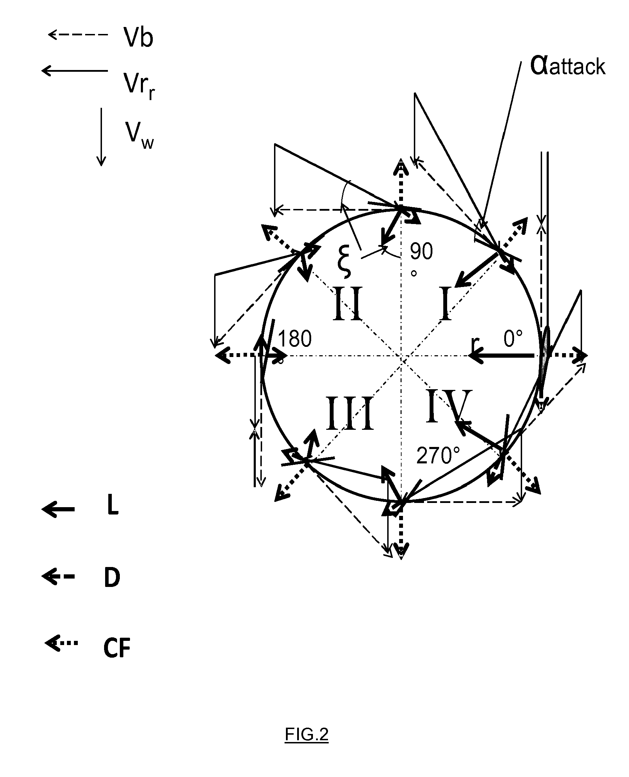

Computing the forces applied by the wind on the blade in case of VAWT using only lift principle under optimal conditions leads to the following results. As shown on FIG. 2, the force applied on the blade, especially the lift force, is maximum, when the blade moves against the wind and is minimum, when the blade moves with the wind. The part of lift force directed towards the rotation axis is not exploited by VAWT with a blade support having arms directly attached on the rotating shaft. Furthermore the pressure distribution on a blade is not uniform, the major part of lift forces being generated on the front part of the blade. This induces a tilting moment in the blade.

As blade orientation into wind is an important factor for having a high lift coefficient and a low drag coefficient, an intended blade steering system should be accurate to maintain the blade in optimum conditions for energy harvesting from wind. Blade inertia or centrifugal forces should not influence blade steering. Furthermore special attention should be paid to upper and lower blade edges, to reduce to a maximum the losses due to induced wakes.

### 2. Steering system proposal

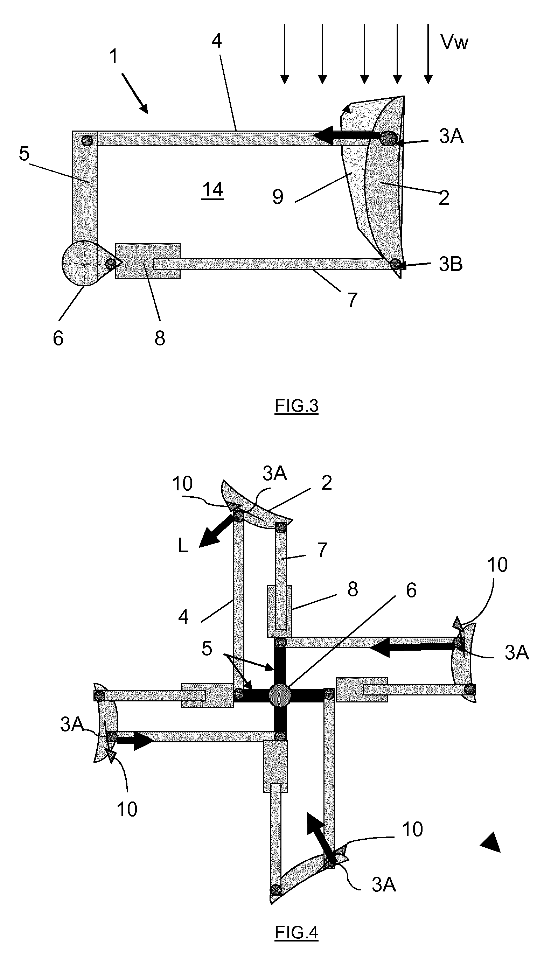

Due to this complicated situation and the fact that inertia and centrifugal forces cannot be excluded, self-orientating systems are not retained as blade steering system for the present invention. According to prior art, as shown in FIG. 3 to 5, a simple steering system under the form of an electromechanical system is shown, which permits to exploit the uneven lift force distribution over the blade width.

For this the blades 2 will be provided with a rotation axis (or shaft) 3 which shall be positioned at best in the front location of the blade (towards the wind) where the blade tilting moment due to lift forces is eliminated. The blade rotation axis (or shaft) 3 is pivotally attached normal to a rectilinear blade holder or supporting arm 4 which is linked via a crank arm 5 to the central rotation shaft 6 of the turbine. The crank arm 5 makes a 90° fixed angle with the blade supporting arm 4.

A steering rod 7 is pivotally attached to the rear part of the blade 2, thus helping to tackle centrifugal forces, and to an actuator 8 which is also attached to the central shaft 6 of the turbine.

With this system the lift force component directed toward the central rotation shaft will also contribute to rotation enhancement, in sectors I and II, thus making the turbine faster and more powerful.

Due to blade attachment a great part of the lift forces (cos ξ) in the sector IV can be recovered and added for positive turbine turning, but a portion with a long lever (sin ξ) has an adverse effect (not shown).

Only in sector III adverse lift force cannot be avoided, but the latter can be minimized by suitable blade orientation to reduce the lift forces at maximum in this sector where the lift force is not very strong.

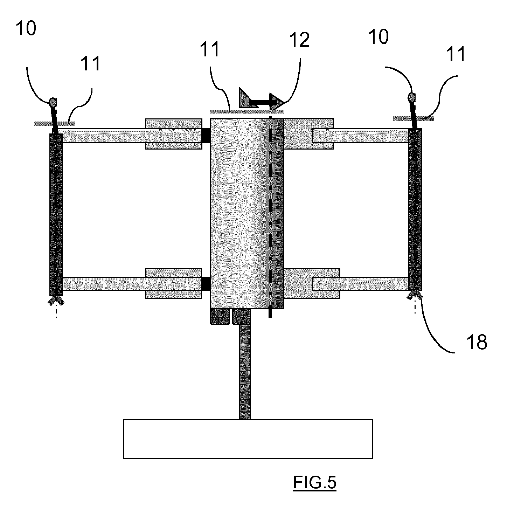

The blade steering is done by the actuator 8, which can be an electric or hydraulic actuator and which is linked to the central rotation shaft 6 or alternately to the following (or next) crank arm 5 (see FIG. 4). The actuator 8 is controlled by a small light weight vane 10, which can freely rotate on the blade rotation axis 3, and a system to permanently acquire its position (not represented). The control system shall also take into account the off-set for blade position compared to the vane position in order to have the blade 2 always set at optimum angle towards the apparent wind as well as the optimal shifting of the parallelogram 14 made of the crank arm 5, the blade holder arm 4, the blade 2 and the actuator 8 with its steering rod 7. The vane 10 is advantageously shielded from pressure changes in the air induced by the blade. The vane shield 11 is mechanically connected to the blade (FIG. 5).

A central vane 12 with position detection is advantageously installed high on top of the VAWT to allow blade steering adjustment in sector III and/or IV if required in order to avoid or minimize usual adverse effects.

In FIG. 5, blade has, opposite to the vane 11 (bottom side), an appropriate device such as a split edge 18 to reduce the edge wake. The shielding 11 of the low inertia vane 12 from blade turbulences is also shown in FIG. 5.

This embodiment according to prior art or that can be inferred from prior art has the following advantages:
- in sectors I and II, there is a better lift transmission to turbine shaft ;
- use of high performance non-symmetric blades with low drag coefficient;
- use of a simple steering system with simple individual vane for each blade, taking into account local apparent wind.

This embodiment has the following drawbacks :
- still negative forces in sectors III and IV ;
- influence of items in sectors III and IV by items in sectors I and II ;
- steering system more expensive due to individual blade vanes ;
- increased complexity due to the presence of central and individual vanes, steering rods and actuators.

### Detailed description of preferred embodiments of the invention

Let us focus now on the case of symmetric blades.

### 1. Improvement by use of symmetric blades

Symmetric blades behave similarly to non-symmetric blades, but when the angle of attack is negative the lift force can be generated in the opposite direction.

Supposing that a vane-controlled steering system is used, similar to the one described above, using symmetric blades allows to adjust the blades in such a manner that there also is always a positive component in sectors III and IV, which contributes to rotation enhancement with the long lever (sin ξ). Furthermore a rotation speed measurement shall be foreseen.

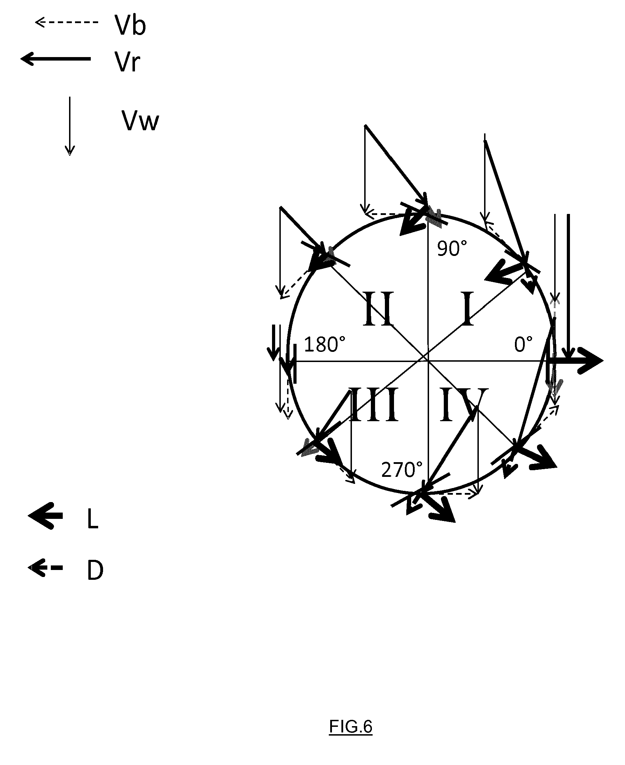

FIG. 6 shows the results obtained on the lift forces when using symmetric blades. In sectors I and II, as compared with the system with orientated non-symmetric blades of FIG. 2, there is no difference in lift direction, but the lift coefficient will be less than with high performance non symmetric blades, so less energy capture. But one can see that in sectors III and IV there is always a positive contribution for rotation due to blade orientation, while the lift force is now oriented outwards in these regions.

The system with crank arm blade fixing and steering could thus be applied here and would be favorable in sectors I and II, but it would generate in sector III and IV an adverse effect to rotation.

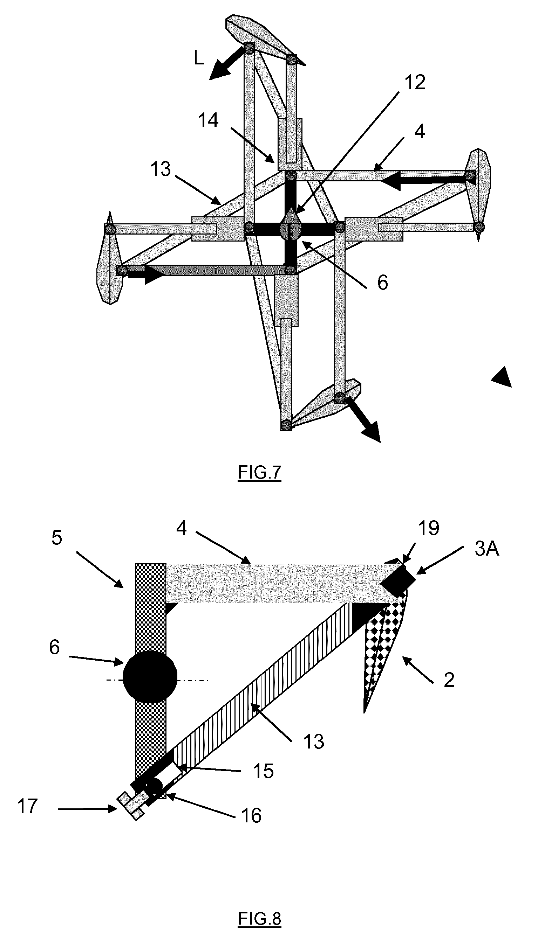

In order to overcome this problem the following elements are advantageously used, as shown in FIG. 7 and 8, which depicts a preferred embodiment showing detailed stress rod and strain rod fixing :
- a stress rod 13, which will tighten and stabilize the parallelogram 14 in sectors III and IV and at the same time take up the forces pulling away from the central shaft 6 transforming them into forces contributing to rotation enhancement. In sectors I and II these stress rods 13 should not produce adverse effects and blade forces are transmitted by a lodging 19 within the V-shaped tip to the blade supporting arm or strain rod 4. The stress rod does not transmit forces coming from the blade towards pivot 16 due to its long hole 15;
- the blade supporting arm or strain rod 4 with its V-shaped tip is designed in such a way that it cannot take up forces from the blade pulling away from the central shaft, but strain rod 4 can transmit forces normal to its length via crank arm 5 to the central shaft 6;

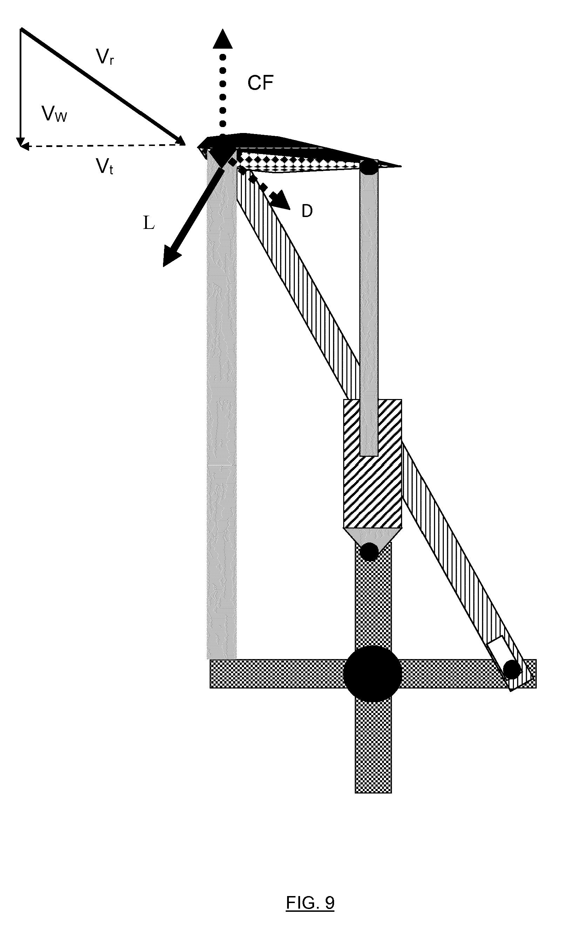

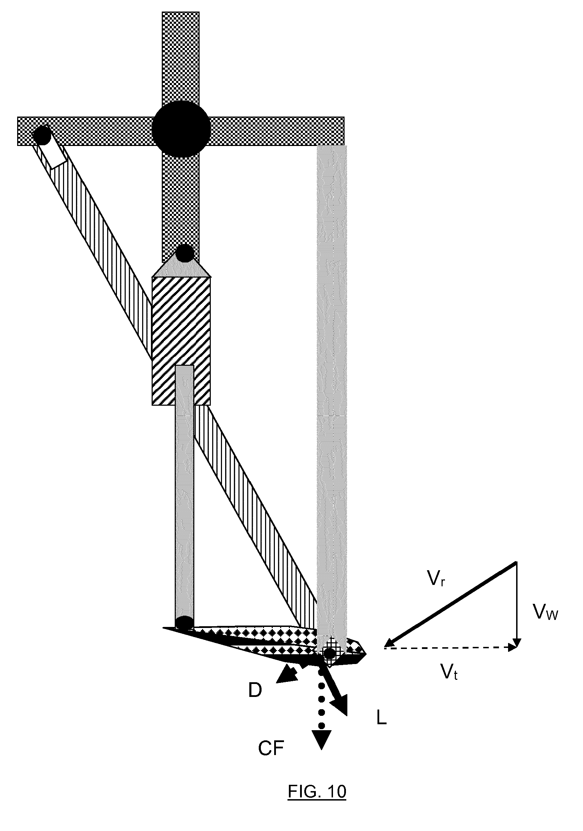

FIG. 9 and 10 show both situations with centrifugal force respectively opposite and parallel to the major lift component.

### 2. Further improvement : high rotation speed

Some improvement can still be obtained by starting the VAWT with the orientation of blades for lift directed towards the centre in sectors I and II and directed outwards in sectors III and IV. When the centrifugal forces become more important, it is more favorable to orientate blades so that they have directed outwards also in sectors I and II, lift and centrifugal forces being in the same direction in order to enhance rotation, neglecting the sin(ξ) of lift force (orientated then against rotation, which decreases with rotation speed). Drag forces are reduced at turbulent flow. This is especially beneficial, with strain and stress system as described above and relative small turbine radius.

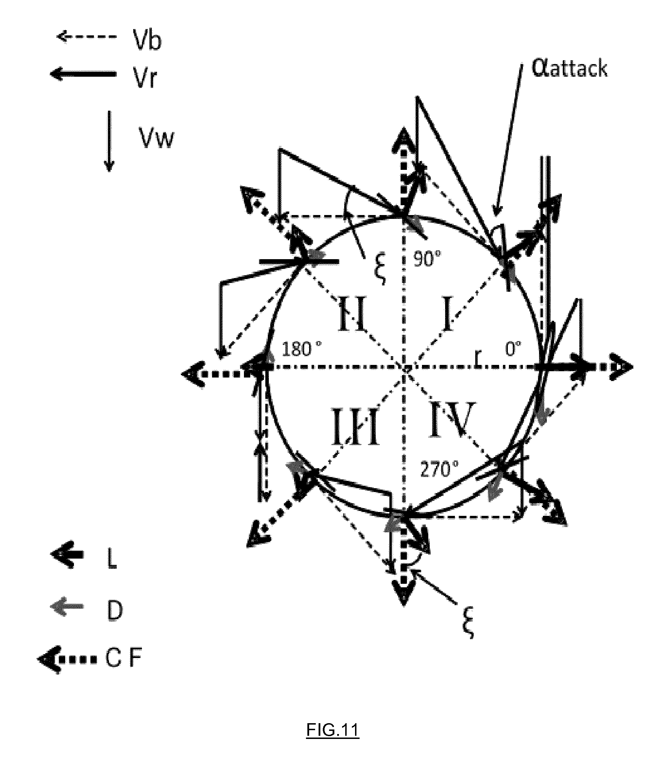

Steering conditions at high rotation speed are shown in vector diagram of FIG. 11.

The advantages of this embodiment are:
- exploiting at maximum lift forces all around the whole revolving ;
- steering system still simple and individual vane for each blade, taking into account local apparent wind ;
- centrifugal forces enhance rotation in all sectors contributing for high blade tip speeds and thereby increase wind harvesting.

The drawbacks of this embodiment are:
- limitation to symmetric blades (less lift coefficient);
- change of direction of lift force at 0° and 180° (jibing) at low speeds ;
- influence of items in sectors III and IV by items in sectors I and II ;
- steering system more expensive due to individual blade vanes ;
- presence of central and individual vanes, steering rods and actuators ;
- high speed edge wake ;
- noise.

### 3. System for braking

According to another preferred embodiment of the invention, the steering system according to the invention shall advantageously decrease the optimal angle of attack towards the apparent wind in case of too high rotation speed; which requires rotation speed and wind speed measurement.

In case of storm the angle of attack can even be oriented to zero, avoiding any rotation and presenting only very little surface towards the wind.

### General advantages of the invention

The solutions of the present invention may be interesting for wind mill designers who want to overcome some of the well-known problems generally encountered in the field. Their implementation is not too difficult, though they make the whole system heavier and more complicated.

The theoretical choice between the non-symmetric and symmetric blade is difficult to assess, as there is no straightforward estimation for the disturbance of wind in sectors III and IV by items in sectors I and II, but harvesting wind energy on the complete rotation (with the symmetric blades) seems to be a big improvement and is most promising.

The solution to reduce the tip wake has to be optimized, as induced losses like tip wakes could also decrease the turbine performance.

The individual blade control by vane for VAWT should be a cheaper solution than prior art HAWT control:
- the control system (vs. 30 % of costs in HAWT) with vane is less demanding ;
- the foundations and tower (vs. 25 % of costs in HAWT) will be reduced due to the reduced overall height and moment ;
- the blades (vs. 25 % of costs in HAWT) are relatively small and can be produced easily while the rotor of VAWT can be made of cheap and resistant material, which is not the case with HAWT.

Small VAWT can be easily erected on building roofs, which is not the case of HAWT.

VAWT fit easier into the surrounding landscape as their horizontal rotation is less visible than the vertical rotation of HAWT.

There is a synergistic effect when having a row of several VAWT normal to wind direction close to each other: the VAWT in the row centre produce more energy than those on the row edge (not possible with HAWT). This last effect can be used off shore having a row of VAWT on a floating device, which is self-orientating in the wind. Due to lower height of VAWT the acceptance of off shore VAWT close to the coast should also be higher.

Another possibility is using the high speed winds existing in altitude with a captive balloon having one VAWT on top rotating in one direction and another underneath the balloon rotating in opposite direction, eliminating thereby efforts due to rotation. This is again not possible with HAWT.

Finally, in case of open water flow the principle of the present invention can also be used.

### List of reference symbols

- 1: steering system
- 2: blade
- 3A: blade rotation axis or blade shaft
- 3B: articulation for steering rod attach
- 4: blade supporting arm/ strain rod
- 5: crank arm
- 6: central rotation shaft
- 7: steering rod
- 8: actuator
- 9: depression area of the blade
- 10: vane
- 11: vane shield
- 12: central low inertia vane
- 13: stress rod
- 14: parallelogram
- 15: long hole
- 16: pivot
- 17: adjusting screw
- 18: split edge
- 19: lodging of blade shaft

## Claims

1. A vertical axis wind turbine having airfoil blades adjustable according to the wind direction, comprising :
- a rotatable central rotation shaft (6) ;
- a plurality of radially spaced blade assemblies connected to the central rotation shaft (6) by a connection system, in which an airfoil blade (2) is essentially vertically and pivotally attached through a first blade rotation axis or shaft (3A) to the outer end of each of said blade assemblies, each of said airfoil blades (2) having a leading edge and a trailing edge and
- a blade steering system (1) intended to pivotally orientate each airfoil blade around its first blade rotation axis or shaft (3A) so as to obtain a determined attack angle for said airfoil blade with respect to the local apparent wind,
**characterized in that** :
- each airfoil blade (2) is also essentially vertically and pivotally attached through a second blade rotation axis (3B) to the outer end of its corresponding blade assembly, the first blade rotation axis (3A) and the second blade rotation axis (3B) being located in the vicinity of the leading edge and of the trailing edge of the airfoil blade respectively ;
- the blade steering system (1) comprises blade supporting means having a rectilinear blade supporting arm or strain rod (4) and a crank arm (5), said blade supporting arm (4) having a first tip being designed for loosely accommodating the blade rotation axis or shaft (3) and having a second tip to connect itself to said crank arm (5), which is disposed at right angle with respect to the blade supporting arm (4), said crank arm (5) being connected to said central rotation shaft (6) ;
- the blade steering system (1) also comprises a steering rod (7) and a linear actuator (8), said steering rod (7) being pivotally connected to the second blade rotation axis (3B) and said linear actuator (8) causing linear displacement of the steering rod (7) so as to orientate the corresponding airfoil blade (2) ;
- the blade steering system (1) also comprises a small light-weight vane (10) freely rotatably mounted on the top of the first blade rotation axis (3A) of each airfoil blade (2) and a control system able to permanently acquire the position of said vane (10) and to control the actuator (8) according to that position.

2. The vertical axis wind turbine according to claim 1, **characterized in that** the first tip of the strain rod (4) designed for loosely accommodating the blade rotation axis or shaft (3) is under the form of a V-shaped lodging (19).

3. The vertical axis wind turbine according to claim 1, **characterized in that** the position of the first blade rotation axis or shaft (3A) in the vicinity of the leading edge is selected primarily so as to eliminate blade tilting moment that could be caused by lift force.

4. The vertical axis wind turbine according to claim 2, **characterized in that** a fixed part of the linear actuator (8) is connected to the central rotation shaft (6) directly or via the crank shaft (5) of the blade steering system (1) of an adjacent airfoil blade (2).

5. The vertical axis wind turbine according to claim 1, **characterized in that** the vertical blade edge opposite to the vane (10) is provided with a device for reducing the edge wake, preferably a split edge (18).

6. The vertical axis wind turbine according to claim 1, **characterized in that** it comprises a central steering low inertia vane (12) disposed on top of the turbine.

7. The vertical axis wind turbine according to claim 1, **characterized in that** it comprises for each vane (10) a shielding device (11) mechanically connected to the corresponding blade (2) in order to shield the vane (10) from air pressure difference on rear and front blade sides respectively.

8. The vertical axis wind turbine according to claim 6, **characterized in that** the position of the low inertia vane (12) is selected so as to avoid influences from the blade turbulences.

9. The vertical axis wind turbine according to claim 4, **characterized in that** it additionally comprises a stress rod (13) respectively connected to the first rotation axis or shaft (3A) of each airfoil blade (2) via its lodging (19), and to a point of connection of the crank arm (5) tip of a following blade, on the other side of the central rotation shaft (6) with regard of the blade axis (3A), where it cooperates with a pivot (16) located in a long hole (15) practiced in the stress rod (13) and with an adjusting screw to allow stress only in the stress rod (13).

10. The vertical axis wind turbine according to claim 1, **characterized in that** the control system comprises a microcontroller or a computer.

11. Method for rotating a vertical axis wind turbine according to anyone of claims 1 to 10, comprising the steps of :
- starting up the turbine with a predetermined orientation of the airfoil blades (2) in the wind, possibly with the help of an external drive system ;
- measuring the direction of the apparent wind on each airfoil blade (2) using the individual blade vanes (10) ;
- communicating said apparent wind direction to the control system ;
- providing an action of the control system on the actuators (8) of the individual steering systems in order to rotate each airfoil blade (2) in a predetermined position about the wind direction as a function of the measured apparent wind direction, so as to maximize the lift force component contributing to the rotation of the turbine in all sectors I, II, III and IV.

12. Method according to claim 11 for rotating a vertical axis wind turbine according to claim 10, further comprising the steps of:
- at starting up of the turbine, orienting the airfoil blades (2) with lift force towards the center of the turbine in sectors I and II and outwards in sectors III and IV ;
- measuring the rotation speed of the turbine ;
- when the turbine has acquired a predetermined rotation speed value, orienting the airfoil blades (2) so that all the lift forces are oriented outwards of the turbine, not only in sectors III and IV but also in sectors I and II.

13. Method according to claim 12, further comprising the steps of:
- measuring the wind speed ;
- in case of high values of the wind speed and/or turbine rotational speed, reducing or annulling the attack angle of the airfoil blades.
